# EUROPÄISCHE PATENTSCHRIFT

(11) **EP 2 859 226 B1**
(45) Veröffentlichungstag und Bekanntmachung des Hinweises auf die Patenterteilung: **18.05.2016**
(21) Anmeldenummer: 13731704.6
(22) Anmeldetag: 03.06.2013
(51) Int. Cl.: F03D 80/00

(54) **SICHERHEITSSYSTEM FÜR EINE WINDENERGIEANLAGE**
SAFETY SYSTEM FOR A WIND TURBINE
SYSTÈME DE SÉCURITÉ POUR ÉOLIENNE

(30) Priorität: 06.06.2012 DE 102012011242
(43) Veröffentlichungstag der Anmeldung: 15.04.2015
(73) Patentinhaber: SSB Wind Systems GmbH & Co. KG, 48499 Salzbergen (DE)
(72) Erfinder: RICKESHENRICH, Christof, 48607 Ochtrup (DE); DE VEEN, Jan, 48565 Steinfurt (DE); KLEIN, Dirk, 49170 Hagen a.T.W. (DE); HORSTJAN, Ronald, 48465 Schüttorf (DE)
(86) Internationale Anmeldenummer: PCT/EP2013/061366
(87) Internationale Veröffentlichungsnummer: WO 2013/182514

(56) Entgegenhaltungen:
- EP-A1- 2 418 380

## Beschreibung

Die Erfindung betrifft ein Sicherheitssystem für eine Windenergieanlage, mit einem Pitchsystem, welches mehrere Antriebssysteme und wenigstens eine Sicherheitsschalteinrichtung umfasst, mittels welcher in Abhängigkeit von wenigstens einem Steuersignal jedes der Antriebssysteme zum Durchführen einer Fahrt in eine sichere Position ansteuerbar ist, und einem in einem an das Pitchsystem angrenzenden Maschinenteil vorgesehenen Sicherheitskreis, der eine Übertragungseinrichtung und eine Steuerung umfasst, mittels welcher das wenigstens eine Steuersignal erzeugbar ist, welches mittels der Übertragungseinrichtung von der Steuerung zu der Sicherheitsschalteinrichtung übertragbar ist.

Aus der EP 1 910 670 B1 ist eine Windenergieanlage mit einem Generator zur Erzeugung elektrischer Energie, einem den Generator antreibenden Rotor mit pitchverstellbaren Rotorblättern und einer Zentralsteuerungseinrichtung bekannt, wobei Einzelpitcheinrichtungen für die Rotorblätter vorgesehen sind, die einen Verstellantrieb, eine Kommunikationsverbindung zur Zentralsteuereinrichtung und einen Regler umfassen, wobei die Rotorblätter zum Abfahren der Windenergieanlage in eine Abschaltposition verstellbar sind. Die Einzelpitcheinrichtungen umfassen zusätzlich einen eigenen Störfalldetektor und eine eigene Auslöseeinrichtung, wobei der Störfalldetektor zum Erkennen von abnormalen Betriebszuständen ausgebildet und mit der Auslöseeinrichtung verbunden ist, die ein Verstellen des jeweiligen Rotorblatts in eine Abschaltposition bewirkt.

Ein anderes Beispiel für ein Sicherheitssystem ist aus der EP 2 418 380 A1 bekannt.

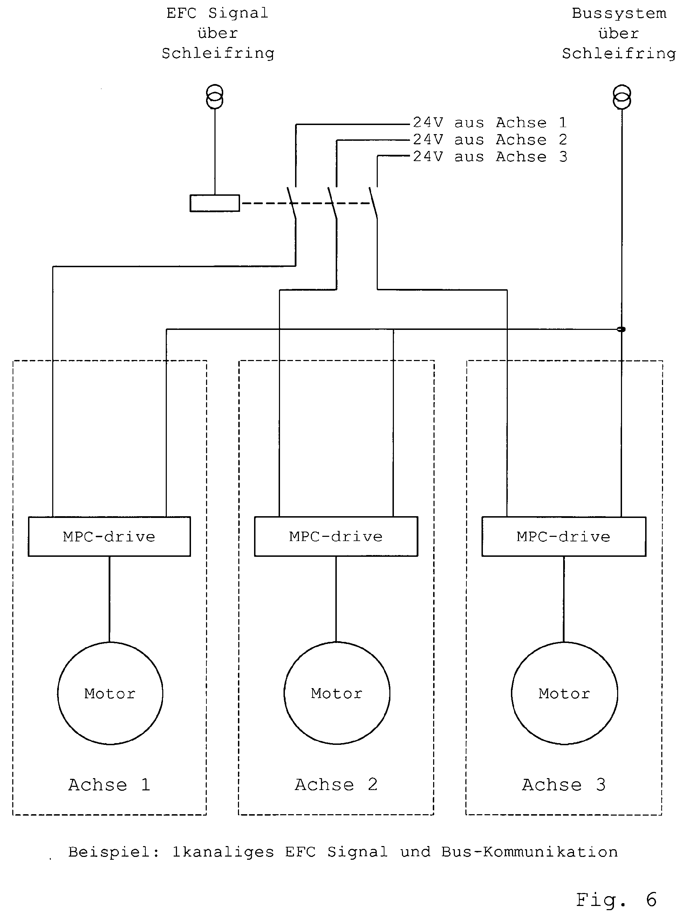

Ein herkömmliches Sicherheitssystem ist aus Fig. 6 ersichtlich, wobei ein EFC-Signal, welches von einer übergeordneten Steuerung und/oder direkt von verschiedenen Not-Aus-/Sensorikeinheiten ausgelöst wird, von einer Steuerung (z.B. Topbox) einkanalig durch eine Übertragungseinrichtung (z.B. Schleifring) zu einem Pitchsystem geführt wird. Das EFC-Signal ist in der Regel ein 24V DC Signal, wobei der Ausdruck EFC als Abkürzung für den englischen Begriff "Emergency Feather Command" steht. Im Pitchsystem wird dieses Signal auf die drei Antriebssysteme verteilt. Löst dieses EFC-Signal aus, z.B. durch eine Signalzustandsänderung, wird für alle drei Antriebssysteme eine Fahrt in die sichere Position (Endlage) eingeleitet. Das EFC-Signal repräsentiert somit einen Steuerbefehl an die Sicherheitsschalteinrichtung, die Rotorblätter in die sichere Position oder Endlage zu drehen.

Kommt es in dieser EFC-Sicherheitskette zu einem Fehler, z.B. durch Einkopplung von Fremdspannung, ist das Einleiten einer Fahrt in die sichere Position über dieses EFC-Signal nicht mehr möglich. Gleichzeitig erkennt aber auch die Betriebsführung (Turbinensteuerung) den Störfall und leitet über das Kommunikations-System (Bus-System) entsprechende Maßnahmen ein. Somit werden die Turbinensteuerung und das Bus-System Bestandteil einer SRP/CS und müssen den Anforderungen der Maschinenrichtlinie entsprechen. Der Ausdruck SRP/CS steht dabei als Abkürzung für den englischen Begriff "Safety-Related Parts of Control System" und bedeutet "sicherheitsbezogene Teile einer Steuerung".

Die vorgenannte Vorgehensweise bei einem Störfall ist aber mit Nachteilen verbunden, von denen nachfolgend einige angegeben sind:
- Bussystem und Betriebsführung (Turbinensteuerung) werden Bestandteil einer SRP/CS und müssen nach Maschinenrichtlinie betrachtet werden.
- Keine Abgrenzung mehr zwischen Betriebsführung und Sicherheitssystem.
- Fehler in der Übertragungseinrichtung (z.B. Schleifring) können Störungen im Bus-System und/oder im EFC-Signal verursachen.

Ausgehend hiervon liegt der Erfindung die Aufgabe zugrunde, die vorgenannten Nachteile vermeiden zu können.

Diese Aufgabe wird erfindungsgemäß durch ein Sicherheitssystem nach Anspruch 1 gelöst. Bevorzugte Weiterbildungen der Erfindung sind in den Unteransprüchen und in der nachfolgenden Beschreibung gegeben.

Das erfindungsgemäße Sicherheitssystem für eine Windenergieanlage weist ein Pitchsystem, welches mehrere Antriebssysteme und wenigstens eine Sicherheitsschalteinrichtung umfasst, mittels welcher in Abhängigkeit von wenigstens einem Steuersignal jedes der Antriebssysteme zum Durchführen einer Fahrt in eine sichere Position ansteuerbar ist, und einen in einem an das Pitchsystem angrenzenden Maschinenteil vorgesehenen Sicherheitskreis auf, der eine Übertragungseinrichtung und eine Steuerung umfasst, mittels welcher das wenigstens eine Steuersignal erzeugbar ist, welches mittels der Übertragungseinrichtung von der Steuerung zu der Sicherheitsschalteinrichtung übertragbar ist, wobei das Steuersignal von der Steuerung in Form von wenigstens zwei Steuersignalen erzeugbar und/oder abgebbar ist, mittels der Übertragungseinrichtung die Steuersignale von der Steuerung zu der Sicherheitsschalteinrichtung übertragbar sind, und mittels der Sicherheitsschalteinrichtung, insbesondere unter Auswertung der Steuersignale, ein sicherheitsrelevanter Fehler in dem Sicherheitskreis, beispielsweise in dessen Übertragungseinrichtung, erkennbar und bei Vorliegen eines solchen Fehlers jedes der Antriebssysteme zum Durchführen einer Fahrt in die sichere Position ansteuerbar ist.

Dadurch, dass ein sicherheitsrelevanter Fehler in dem Sicherheitskreis mittels der Sicherheitsschalteinrichtung erkennbar ist und ferner jedes der Antriebssysteme zum Durchführen einer Notausfahrt mittels der Sicherheitsschalteinrichtung ansteuerbar ist, erfolgen die Erkennung des sicherheitsrelevanten Fehlers sowie das Ansteuern der Antriebssysteme zum Durchführen einer Fahrt in die sichere Position bei Vorliegen eines solchen Fehlers innerhalb des Pitchsystems. Ein Umweg über die Betriebsführung der Windenergieanlage ist somit nicht mehr erforderlich, sodass die aus dem Stand der Technik bekannten Nachteile vermeidbar sind. Das Sicherheitssystem bildet oder umfasst insbesondere eine Sicherheitskette und/oder das Sicherheitssystem bildet oder umfasst insbesondere eine Sicherheitsanordnung. Bevorzugt bilden der Sicherheitskreis und die Sicherheitsschalteinrichtung die Sicherheitskette und/oder die Sicherheitskette umfasst den Sicherheitskreis und die Sicherheitsschalteinrichtung. Da das Pitchsystem die Sicherheitsschalteinrichtung umfasst, kann die Sicherheitskette z.B. auch den Sicherheitskreis und das Pitchsystem umfassen. Der Sicherheitskreis bildet insbesondere eine Sicherheitskreiseinrichtung. Ferner bildet die Steuerung insbesondere eine Steuerungseinrichtung.

Die Erkennung eines sicherheitsrelevanten Fehlers im Sicherheitskreis mittels der Sicherheitsschalteinrichtung ist insbesondere aufgrund der wenigstens zwei Steuersignale möglich. Gemäß einer Ausgestaltung sind die Steuersignale mittels der Sicherheitsschalteinrichtung einer Plausibilitätsprüfung unterziehbar, wobei das Vorliegen eines sicherheitsrelevanten Fehlers in dem Sicherheitskreis aus dem Ergebnis der Plausibilitätsprüfung erkennbar ist.

Gemäß einer Weiterbildung wird bei der Plausibilitätsprüfung zusätzlich zu den Steuersignalen wenigstens ein anderes Signal herangezogen, welches insbesondere mittels der Übertragungseinrichtung zu der Sicherheitsschalteinrichtung übertragbar ist. Bevorzugt sind mittels der Sicherheitsschalteinrichtung die Steuersignale daher zusammen mit wenigstens einem anderen Signal, welches mittels der Übertragungseinrichtung zu der Sicherheitsschalteinrichtung übertragbar ist, der Plausibilitätsprüfung unterziehbar. Hierdurch kann die Zuverlässigkeit der Plausibilitätsprüfung weiter erhöht werden.

Bevorzugt umfasst die Sicherheitsschalteinrichtung eine Kurzschlusserkennung und/oder eine Querschlusserkennung. Bevorzugt ist das Vorliegen eines Kurzschlusses und/oder eines Querschlusses als sicherheitsrelevanter Fehler in dem Sicherheitskreis aus dem Ergebnis der Plausibilitätsprüfung erkennbar. Durch den Einsatz mindestens einer Sicherheitsschalteinrichtung innerhalb des Pitchsystems, welches eine Kurz- und Querschlusserkennung beinhaltet, kann insbesondere die sichere Übertragung der Steuersignale von der Steuerung, über die Übertragungseinrichtung, bis zum Pitchsystem gewährleistet werden.

Bevorzugt ist das Steuersignal von der Steuerung in Form von den wenigstens zwei Steuersignalen redundant erzeugbar und/oder abgebbar. Bei den Steuersignalen handelt es sich somit bevorzugt um gleiche und/oder redundante Signale. Unterscheiden sich die Steuersignale voneinander, liegt mit großer Wahrscheinlichkeit ein sicherheitsrelevanter Fehler in dem Sicherheitskreis vor.

Bevorzugt sind die Steuersignale mittels der Sicherheitsschalteinrichtung miteinander vergleichbar. Insbesondere ist das Vorliegen eines sicherheitsrelevanten Fehlers in dem Sicherheitskreis aus dem Ergebnis dieses Vergleichs mittels der Sicherheitsschalteinrichtung erkennbar. Die Plausibilitätsprüfung umfasst somit bevorzugt einen Vergleich der Steuersignale miteinander.

Vorteilhaft ist wenigstens eines der Steuersignale oder sind die Steuersignale mittels der Sicherheitsschalteinrichtung mit dem wenigstens einen anderen Signal vergleichbar. Insbesondere ist das Vorliegen eines sicherheitsrelevanten Fehlers in dem Sicherheitskreis aus dem Ergebnis dieses Vergleichs mittels der Sicherheitsschalteinrichtung erkennbar. Die Plausibilitätsprüfung umfasst somit bevorzugt einen Vergleich der oder wenigstens eines der Steuersignale mit dem wenigstens einen anderen Signal.

Bevorzugt ist mittels der Sicherheitsschalteinrichtung das Vorliegen eines sicherheitsrelevanten Fehlers in dem Sicherheitskreis dadurch erkennbar, dass die Steuersignale unterschiedlich sind. Vorteilhaft ist mittels der Sicherheitsschalteinrichtung das Vorliegen eines sicherheitsrelevanten Fehlers in dem Sicherheitskreis dadurch erkennbar, dass die Steuersignale sich über eine vorgegebene Zeitspanne und/oder über eine zulässige Abweichung hinaus voneinander unterscheiden. Dadurch können kurzfristige und/oder unbeachtliche Signalschwankungen der Steuersignale unberücksichtigt bleiben. Die vorgegebene Zeitspanne beträgt z.B. wenige Millisekunden. Die vorgegebene Abweichung ist insbesondere durch einen unteren Schwellenwert und einen oberen Schwellenwert gegeben, wobei zwischen den Schwellenwerten die Differenz der Steuersignale variieren darf, ohne dass ein sicherheitsrelevanter Fehler vorliegt. Erreicht oder unterschreitet die Differenz der Steuersignale den unteren Schwellenwert oder erreicht oder überschreitet die Differenz der Steuersignale den oberen Schwellenwert wird von der Sicherheitsschalteinrichtung ein sicherheitsrelevanter Fehler erkannt.

Gemäß einer Weiterbildung sind die Steuersignale derart erzeugbar, dass die Steuersignale im bestimmungsgemäßen Betrieb der Windenergieanlage eine vorgegebene, vorzugsweise von Null verschiedene, Spannung aufweisen und/oder dass ein spannungsloser Zustand der Steuersignale den Befehl zu einer Fahrt in die sichere Position repräsentiert. Bevorzugt werden die Antriebssysteme mittels der Sicherheitsschalteinrichtung zum Durchführen einer Fahrt in die sichere Position angesteuert, wenn die Steuersignale einen spannungslosen Zustand annehmen. In diesem Fall dürfen sogar beide Steuersignale ausfallen, da eine Fahrt in die sichere Position unabhängig davon durchgeführt wird, ob die Steuersignale gewollt oder durch einen Fehler im Sicherheitskreis spannungslos sind. Angemerkt sei hier, dass der Ausfall beider Steuersignale insbesondere einen sicherheitsrelevanten Fehler im Sicherheitskreis darstellt.

Das wenigstens eine Steuersignal ist insbesondere ein EFC-Signal. Vorzugsweise handelt es sich bei den Steuersignalen um EFC-Signale. Vorteilhaft sind die Steuersignale derart erzeugbar, dass die Steuersignale im bestimmungsgemäßen Betrieb der Windenergieanlage einen vorgegebenen, vorzugsweise von Null verschiedenen, ersten Signalpegel aufweisen. Insbesondere handelt es sich bei dem ersten Signalpegel um eine Gleichspannung, vorzugsweise um eine von Null verschiedene Gleichspannung, beispielsweise um eine Gleichspannung von 24V. Der erste Signalpegel repräsentiert vorzugsweise einen H-Pegel.

Vorteilhaft sind die Steuersignale ferner derart erzeugbar, dass die Steuersignale zum Signalisieren einer Fahrt in die sichere Position einen vorgegebenen zweiten Signalpegel aufweisen, der sich von dem ersten Signalpegel unterscheidet. Der zweite Signalpegel repräsentiert insbesondere einen L-Pegel und ist vorzugsweise kleiner als der erste Signalpegel. Bevorzugt ist der zweite Signalpegel gleich Null und/oder liegt auf Nullpotential. Insbesondere sind die Steuersignale mittels der Steuerung zum Durchführen einer Fahrt in die sichere Position abschaltbar.

Unterscheiden sich die Signalpegel der Steuersignale voneinander, liegt mit großer Wahrscheinlichkeit ein sicherheitsrelevanter Fehler im Sicherheitskreis vor. Bevorzugt sind die Signalpegel der Steuersignale daher mittels der Sicherheitsschalteinrichtung miteinander vergleichbar. Insbesondere ist das Vorliegen eines sicherheitsrelevanten Fehlers im Sicherheitskreis aus dem Ergebnis dieses Vergleichs mittels der Sicherheitsschalteinrichtung erkennbar. Die Plausibilitätsprüfung umfasst somit bevorzugt einen Vergleich der Signalpegel der Steuersignale miteinander.

Vorzugsweise ist mittels der Sicherheitsschalteinrichtung das Vorliegen eines sicherheitsrelevanten Fehlers im Sicherheitskreis dadurch erkennbar, dass die Steuersignale unterschiedliche Signalpegel aufweisen. Vorteilhaft ist mittels der Sicherheitsschalteinrichtung das Vorliegen eines sicherheitsrelevanten Fehlers im Sicherheitskreis dadurch erkennbar, dass die Signalpegel sich über eine vorgegebene Zeitspanne und/oder über eine zulässige Abweichung hinaus voneinander unterscheiden. Dadurch können kurzfristige und/oder unbeachtliche Schwankungen der Signalpegel unberücksichtigt bleiben. Die vorgegebene Zeitspanne beträgt z.B. wenige Millisekunden. Die vorgegebene Abweichung ist insbesondere durch einen unteren Schwellenwert und einen oberen Schwellenwert gegeben, wobei zwischen den Schwellenwerten die Differenz der Signalpegel variieren darf, ohne dass ein sicherheitsrelevanter Fehler vorliegt. Erreicht oder unterschreitet die Differenz der Signalpegel den unteren Schwellenwert oder erreicht oder überschreitet die Differenz der Signalpegel den oberen Schwellenwert wird von der Sicherheitsschalteinrichtung ein sicherheitsrelevanter Fehler erkannt.

Die Übertragungseinrichtung umfasst bevorzugt mehrere elektrische Leitungen. Die Steuersignale werden insbesondere jeweils über eine der elektrischen Leitungen übertragen, wobei die die Steuersignale übertragenden Leitungen auch als Steuerleitungen bezeichnet werden. Vorteilhaft wird auch das andere Signal über eine der elektrischen Leitungen übertragen. Bei den elektrischen Leitungen und/oder bei den Steuerleitungen handelt es sich insbesondere um elektrisch voneinander getrennte Leitungen.

Bevorzugt umfasst die Übertragungseinrichtung Schleifringe oder wenigstens einen Schleifring, über welchen oder welche das wenigstens eine Steuersignal und/oder die Steuersignale führbar ist bzw. sind. Vorteilhaft umfasst die Übertragungseinrichtung ferner wenigstens einen Schleifring oder wenigstens einen anderen Schleifring, über welchen das wenigstens eine andere Signal führbar ist. Die Übertragungseinrichtung ist insbesondere eine Drehübertragungseinrichtung. Die elektrischen Leitungen und/oder Steuerleitungen sind bevorzugt über die Schleifringe der Übertragungseinrichtung geführt. Vorteilhaft sind die elektrischen Leitungen und/oder Steuerleitungen der Übertragungseinrichtung über separate Schleifringe der Übertragungseinrichtung geführt. Die die Steuersignale übertragenden Schleifringe werden z.B. auch als Steuersignalschleifringe bezeichnet.

Mittels der Sicherheitsschalteinrichtung ist insbesondere ein Kurzschluss in einer oder in wenigstens einer der Steuerleitungen erkennbar. Im Falle eines Kurzschlusses ist die betreffende Steuerleitung insbesondere spannungslos und/oder weist Nullpotential und/oder einen L-Pegel auf. Bevorzugt ist mittels der Sicherheitsschalteinrichtung ferner ein Querschluss zwischen einer oder wenigstens einer der Steuerleitungen und einer oder wenigstens einer anderen der elektrischen Leitungen erkennbar, bei der es sich beispielsweise um die das andere Signal übertragende Leitung handelt. Im Falle eines Querschlusses nimmt die betreffende Steuerleitung insbesondere nicht plausible Spannungswerte an, was vorteilhaft mittels der Sicherheitsschalteinrichtung erkennbar ist.

Die Antriebssysteme umfassen bevorzugt jeweils eine Motorsteuerung und einen Motor, der insbesondere ein Elektromotor ist. Die Motorsteuerungen umfassen insbesondere jeweils einen Umrichter, einen Gleichtromsteller und/oder andere Stromrichter. Die Anzahl der Antriebssysteme beträgt vorzugsweise drei.

Die Sicherheitsschalteinrichtung umfasst bevorzugt wenigstens eine Steuereinheit. Insbesondere sind mittels der Steuereinheit die Plausibilitätsprüfung und/oder der oder jeder der Vergleiche und/oder die Kurzschlusserkennung und/oder die Querschlusserkennung durchführbar. Die Steuereinheit bildet oder umfasst z.B. einen Mikroprozessor, einen Mikrocontroller, eine anwendungsspezifische integrierte Schaltung (AISIC), eine Feld programmierbare Logikgatter-Anordnung (FPGA) und/oder eine andere programmierbare Schaltung der Signalverarbeitung.

Die Sicherheitsschalteinrichtung umfasst bevorzugt wenigstens eine Schaltvorrichtung, mittels welcher jedem der Antriebssysteme und/oder jeder der Motorsteuerungen ein Aktivierungssignal zuführbar ist. Insbesondere ist die Schaltvorrichtung durch die Steuereinheit steuerbar. Das Aktivierungssignal kann ein gemeinsames Aktivierungssignal für alle Antriebssysteme sein. Bevorzugt ist jedem der Antriebssysteme und/oder jeder der Motorsteuerungen mittels der wenigstens einen Schaltvorrichtung aber ein separates Aktivierungssignal zuführbar. Bei den Aktivierungssignalen handelt es sich insbesondere um Gleichspannungssignale. Jedes Aktivierungssignal ist oder liefert bevorzugt eine Gleichspannung von z.B. 24V. Vorteilhaft liefert das Pitchsystem die Aktivierungssignale. Bevorzugt ist jedes der Aktivierungssignale einem der Antriebssysteme zugeordnet. Beispielsweise wird jedes der Aktivierungssignale von dem jeweiligen Antriebssystem und/oder der jeweiligen Motorsteuerung geliefert, sodass jedes der Aktivierungssignale mittels der Sicherheitsschalteinrichtung und/oder der Schaltvorrichtung zu dem jeweiligen Antriebssystem und/oder der jeweiligen Motorsteuerung zurückführbar ist. Werden die Aktivierungssignale den Antriebssystemen und/oder den Motorsteuerungen zugeführt, so wird mittels der Antriebssysteme und/oder der Motorsteuerungen eine Fahrt in die sichere Position ausgeführt. Mittels der Aktivierungssignale ist den Antriebssystemen und/oder den Motorsteuerungen somit signalisierbar, eine Fahrt in die sichere Position durchzuführen. Die Schaltvorrichtung umfasst bevorzugt ein oder wenigstens ein Relais oder ist durch ein oder wenigstens eine Relais gebildet. Insbesondere kann die Sicherheitsschalteinrichtung somit auch als Sicherheitsrelais bezeichnet werden. Bevorzugt umfasst das Sicherheitssystem, beispielsweise zu Erweiterungszwecken, mehrere Sicherheitsrelais (Sicherheitsschalteinrichtungen), die insbesondere miteinander koppelbar sind. Vorteilhaft umfasst das Pitchsystem diese Sicherheitsrelais. Vorzugsweise ist jedes der Sicherheitsrelais gemäß allen im Zusammenhang mit der Sicherheitsschalteinrichtung beschriebenen Ausgestaltungen ausbildbar und/oder weiterbildbar.

Gemäß einer Ausgestaltung sind mittels der Sicherheitsschalteinrichtung wenigstens zwei Signale erzeugbar, die mittels der Übertragungseinrichtung von der Sicherheitsschalteinrichtung zu der Steuerung übertragbar sind. Diese Signale werden im Folgenden auch als Prüfsignale bezeichnet. Mittels der Steuerung sind aus den Prüfsignalen insbesondere die Steuersignale bildbar. Vorteilhaft sind mittels der Steuerung wenigstens zwei Schalter schaltbar, an denen eingangsseitig jeweils eines der Prüfsignale angelegt ist, wobei die Steuersignale durch die Ausgangssignale der Schalter gebildet sind. Bevorzugt werden hierdurch, insbesondere im geschlossenen Zustand der Schalter, zwei Signalschleifen geschaffen, sodass die Fehlererkennungssicherheit weiter erhöht wird. Die Schalter können insbesondere der Steuerung zugerechnet werden.

Die Prüfsignale werden insbesondere jeweils über eine der elektrischen Leitungen der Übertragungseinrichtung übertragen, wobei die die Prüfsignale führenden Leitungen auch als Prüfsignalleitungen bezeichnet werden. Bevorzugt umfasst die Übertragungseinrichtung Schleifringe, über welche die Prüfsignale führbar sind und/oder die Prüfsignalleitungen geführt sind. Diese Schleifringe werden z.B. auch als Prüfsignalschleifringe bezeichnet.

Vorteilhaft sind die Prüfsignale derart erzeugbar, dass sie eine vorgegebene, vorzugsweise von Null verschiedene, Spannung aufweisen. Insbesondere weisen die Prüfsignale eine Gleichspannung, vorzugsweise eine von Null verschiedene Gleichspannung, beispielsweise eine Gleichspannung von 24V auf. Vorteilhaft weisen die Prüfsignale einen H-Pegel auf. Bei den Prüfsignalen handelt es sich bevorzugt um gleiche und/oder redundante Signale.

Bevorzugt sind die Schalter im bestimmungsgemäßen Betrieb der Windenergieanlage geschlossen. Somit werden die Prüfsignale insbesondere zu der Sicherheitsschalteinrichtung zurückgeschleift. Vorteilhaft können die Schalter mittels der Steuerung zum Durchführen einer Fahrt in die sichere Position geöffnet werden. Ebenfalls ist es möglich, dass es sich bei den Schaltern um Umschalter handelt, mittels welchen die Steuerleitungen beim Öffnen der Schalter auf Nullpotential und/oder den L-Pegel gelegt werden. Durch Öffnen der Schalter werden die Steuersignale somit spannungslos und/oder weisen einen L-Pegel und/oder Nullpotential auf. Im geschlossenen Zustand der Schalter entsprechen die Steuersignale insbesondere den Prüfsignalen. Im geöffneten Zustand der Schalter liegt bevorzugt keine Spannung an den Steuerleitungen an, sodass die Steuersignale nicht vorhanden sind und/oder jeweils keine Spannung liefern, was einem L-Pegel und/oder Nullpotential entspricht.

Gemäß einer vorteilhaften Ausgestaltung der Erfindung schickt(en) die Sicherheitsschalteinrichtung(en) mindestens zwei Signale über die Schleifringe zur Steuerung. In der Steuerung werden diese Signale über eine entsprechende SRP/CS geschaltet und wieder über die Übertragungseinrichtung zum Pitchsystem geleitet. Kommt es im Sicherheitskreis des angrenzenden Maschinenteils (z.B. in der Übertragungseinrichtung) zu einem sicherheitsrelevanten Fehler (z.B. Kabelabriss, Querschluss, Kurzschluss, Kanalübersprung und dadurch Fremdspannung usw.), wird es von der (von den) Sicherheitsschalteinrichtung(en) im Pitchsystem erkannt. Die Sicherheitsschalteinrichtung(en) leitet(n) umgehend und unabhängig von der Betriebsführung "sicher" für alle drei Antriebssysteme die "Fahrt in die sichere Position" ein. Jedes der drei Antriebssysteme wird über einen separaten Relaisausgang der Sicherheitsschalteinrichtung angesteuert.

Die Steuerung umfasst oder bildet vorzugsweise eine Logikeinheit. Gemäß einer Ausgestaltung ist der Steuerung wenigstens ein Eingangssignal zuführbar, welches von dieser auswertbar ist, wobei das wenigstens eine Steuersignal und/oder die Steuersignale in Abhängigkeit von dem wenigstens einen Eingangssignal erzeugbar ist bzw. sind. Mittels der Steuerung ist somit unter Auswertung des wenigstens einen Eingangssignals bestimmbar, ob das Steuersignal der Sicherheitsschalteinrichtung den Befehl signalisieren soll, die Antriebssysteme zum Durchführen einer Fahrt in die sichere Position anzusteuern.

Gemäß einer Weiterbildung ist das wenigstens eine Eingangssignal mittels einer übergeordneten Steuerung erzeugbar. Wird von der übergeordneten Steuerung ein Fehler erkannt, der eine Abschaltung der Windenergieanlage erforderlich macht, kann somit der Sicherheitsschalteinrichtung der Befehl signalisiert werden, die Antriebssysteme zum Durchführen einer Fahrt in die sichere Position anzusteuern. Die übergeordnete Steuerung wird beispielsweise auch als Windenergieanlagensteuerung oder Turbinensteuerung bezeichnet. Ergänzend oder alternativ ist eine mit der Steuerung verbundene und wenigstens einen Sensor umfassende Sensoreinrichtung vorgesehen, mittels welcher das Eingangssignal in Abhängigkeit von wenigstens einem Sensorsignal erzeugbar ist.

Mittels des wenigstens einen Sensors ist bevorzugt wenigstens ein Betriebsparameter der oder einer Windenergieanlage erfassbar. Das Sensorsignal und/oder das Eingangssignal ist somit bevorzugt abhängig von dem wenigstens einen Betriebsparameter. Ergibt die Auswertung des Eingangssignals, dass der wenigstens eine Betriebsparameter unzulässig ist, ist mittels der Steuerung über die Steuersignale an die Sicherheitsschalteinrichtung der Befehl signalisierbar, die Antriebssysteme zum Durchführen einer Fahrt in die sichere Position anzusteuern.

Die Windenergieanlage umfasst bevorzugt einen Rotor. Insbesondere ist der Rotor relativ zu dem Maschinenteil, vorzugsweise um eine Rotorachse, drehbar. Vorteilhaft ist der Rotor, vorzugsweise um die Rotorachse, drehbar an dem Maschinenteil gelagert. Der Rotor weist bevorzugt eine Rotornabe und mehrere Rotorblätter auf, die insbesondere jeweils an der Rotornabe um eine Blattachse drehbar gelagert sind. Die Anzahl der Rotorlätter beträgt vorzugsweise drei. Insbesondere verlaufen die Blattachsen der Rotorblätter senkrecht oder näherungsweise senkrecht zur Rotorachse.

Der Maschinenteil umfasst insbesondere Einrichtungen und/oder Maschinen der Windenergieanlage. Beispielsweise umfasst der Maschinenteil einen elektrischen Generator, der von dem Rotor antreibbar ist. Ferner kann der Maschinenteil auch die übergeordnete Steuerung umfassen. Die Windenergieanlage umfasst bevorzugt einen Turm, an dessen oberen Ende der Maschinenteil vorgesehen ist.

Der Rotor umfasst insbesondere das Pitchsystem. Vorteilhaft ist das Pitchsystem im Rotor angeordnet. Jedem der Rotorblätter ist bevorzugt eines der Antriebssysteme zugeordnet. Insbesondere ist jedes Rotorblatt mittels des ihm zugeordneten Antriebssystems um seine Blattachse drehbar. Jedes Rotorblatt ist vorzugsweise mit einem oder mehreren der Antriebssysteme mechanisch gekoppelt, insbesondere mit dem ihm zugeordneten Antriebssystem. Ist jedes Rotorblatt mit mehreren der Antriebssysteme mechanisch gekoppelt, so bilden diese vorzugsweise eine Master/Slave-Anordnung. Vorteilhaft ist jedes Rotorblatt mit einem der Motoren mechanisch gekoppelt, insbesondere mit dem Motor des ihm zugeordneten Antriebssystems. Bei einer Fahrt in die sichere Position werden insbesondere die Rotorblätter mittels der Antriebssysteme in eine sichere Position gedreht, die auch als Fahnenstellung bezeichnet wird. Vorzugsweise werden bei einer Fahrt in die sichere Position die Rotorblätter, bevorzugt auf dem kürzesten Weg, in die sichere Position überführt, die vorteilhaft einer 90°-Stellung der Rotorblätter, insbesondere bezüglich der Rotorebene, entspricht. Bevorzugt werden somit bei einer Fahrt in die sichere Position die Blattwinkel (Pitchwinkel) der Rotorblätter, insbesondere bezüglich der Rotorebene, auf einen Winkel von insbesondere 90° eingestellt und/oder von einem Ausgangswinkel, der beispielsweise 0° beträgt oder z.B. zwischen 0° und ca. 30° liegt, zu einem Endwinkel von vorzugsweise 90° geändert.

Bevorzugt ist das Pitchsystem, insbesondere zusammen mit dem das Pitchsystem umfassenden Rotor, relativ zu dem angrenzenden Maschinenteil drehbar, vorzugsweise um die Rotorachse. Bevorzugt ist der wenigstens eine Sensor ein Drehzahlsensor, mittels welchem insbesondere die Drehzahl des Pitchsystems und/oder die Drehzahl des das Pitchsystem umfassenden Rotors relativ zu dem Maschinenteil erfassbar ist. Ergibt die Auswertung des wenigstens einen Eingangssignals mittels der Steuerung, dass diese Drehzahl einen vorgegebenen Drehzahlschwellenwert erreicht oder überschreitet, ist der Sicherheitsschalteinrichtung mittels der Steuerung insbesondere der Befehl signalisierbar, die Antriebssysteme zum Durchführen einer Fahrt in die sichere Position anzusteuern. Bevorzugt ist der Sensor redundant vorgesehen, sodass das wenigstens eine Eingangssignal der Steuerung in Form von wenigstens zwei Eingangssignalen, insbesondere redundant, zuführbar ist. Hierdurch kann das Abschalten der Windenergieanlage bei überhöhter Drehzahl auch bei Ausfall von einem der Sensoren sichergestellt werden.

Das Sicherheitssystem ist bevorzugt Bestandteil einer SRP/CS. Insbesondere ist das Sicherheitssystem konform zu einer Maschinenrichtlinie der Windenergieanlage ausgelegt.

Die Windenergieanlage umfasst insbesondere das Sicherheitssystem. Bei dem erfindungsgemäßen Sicherheitssystem handelt es sich daher bevorzugt um ein Sicherheitssystem einer oder in einer Windenergieanlage.

Die Erfindung betrifft ferner eine Windenergieanlage mit einem Maschinenteil, einem drehbar an dem Maschinenteil gelagerten Rotor, der eine Rotornabe und mehrere Rotorblätter umfasst, die jeweils an der Rotornabe um eine Blattachse drehbar gelagert sind, und wenigstens einem Sicherheitssystem. Bei dem Sicherheitssystem handelt es sich insbesondere um ein erfindungsgemäßes Sicherheitssystem, welches gemäß allen in diesem Zusammenhang erläuterten Ausgestaltungen weitergebildet sein kann.

Auch betrifft die Erfindung die Verwendung eines Sicherheitssystems für eine oder in einer Windenergieanlage, wobei das Sicherheitssystem ein Pitchsystem, welches mehrere Antriebssysteme und wenigstens eine Sicherheitsschalteinrichtung umfasst, mittels welcher in Abhängigkeit von wenigstens einem Steuersignal jedes der Antriebssysteme zum Durchführen einer Fahrt in eine sichere Position ansteuerbar ist, und einen in einem an das Pitchsystem angrenzenden Maschinenteil vorgesehenen Sicherheitskreis aufweist, der eine Übertragungseinrichtung und eine Steuerung umfasst, mittels welcher das wenigstens eine Steuersignal erzeugt wird, welches mittels der Übertragungseinrichtung von der Steuerung zu der Sicherheitsschalteinrichtung übertragen wird, wobei das Steuersignal von der Steuerung in Form von wenigstens zwei Steuersignalen erzeugt und/oder abgegeben wird, mittels der Übertragungseinrichtung die Steuersignale von der Steuerung zu der Sicherheitsschalteinrichtung übertragen werden, und mittels der Sicherheitsschalteinrichtung, insbesondere unter Auswertung der Steuersignale, ein sicherheitsrelevanter Fehler in dem Sicherheitskreis, beispielsweise in dessen Übertragungseinrichtung, erkennbar ist und bei Vorliegen eines solchen Fehlers jedes der Antriebssysteme mittels der Sicherheitsschalteinrichtung zum Durchführen einer Fahrt in die sichere Position angesteuert wird. Die erfindungsgemäße Verwendung kann gemäß allen im Zusammenhang mit dem erfindungsgemäßen Sicherheitssystem erläuterten Ausgestaltungen weitergebildet sein kann. Bevorzugt wird das Steuersignal von der Steuerung in Form von den wenigstens zwei Steuersignalen redundant erzeugt und/oder abgegeben.

Zusätzlich betrifft die Erfindung ein Verfahren zum Steuern einer Windenergieanlage mit einem Sicherheitssystem, welches ein Pitchsystem, das mehrere Antriebssysteme und wenigstens eine Sicherheitsschalteinrichtung umfasst, mittels welcher in Abhängigkeit von wenigstens einem Steuersignal jedes der Antriebssysteme zum Durchführen einer Fahrt in eine sichere Position ansteuerbar ist, und einen in einem an das Pitchsystem angrenzenden Maschinenteil vorgesehenen Sicherheitskreis aufweist, der eine Übertragungseinrichtung und eine Steuerung umfasst, mittels welcher das wenigstens eine Steuersignal erzeugt wird, welches mittels der Übertragungseinrichtung von der Steuerung zu der Sicherheitsschalteinrichtung übertragen wird, wobei das Steuersignal von der Steuerung in Form von wenigstens zwei Steuersignalen erzeugt und/oder abgegeben wird, mittels der Übertragungseinrichtung die Steuersignale von der Steuerung zu der Sicherheitsschalteinrichtung übertragen werden, und mittels der Sicherheitsschalteinrichtung, insbesondere unter Auswertung der Steuersignale, ein sicherheitsrelevanter Fehler in dem Sicherheitskreis, beispielsweise in dessen Übertragungseinrichtung, erkennbar ist und bei Vorliegen eines solchen Fehlers jedes der Antriebssysteme mittels der Sicherheitsschalteinrichtung zum Durchführen einer Fahrt in die sichere Position angesteuert wird. Das erfindungsgemäße Verfahren kann gemäß allen im Zusammenhang mit dem erfindungsgemäßen Sicherheitssystem erläuterten Ausgestaltungen weitergebildet sein kann. Insbesondere wird das erfindungsgemäße Verfahren mit dem erfindungsgemäßen Sicherheitssystem durchgeführt. Bevorzugt wird das Steuersignal von der Steuerung in Form von den wenigstens zwei Steuersignalen redundant erzeugt und/oder abgegeben.

Die Erfindung bietet insbesondere die nachfolgend angegebenen Vorteile:
- Klare Trennung zwischen Betriebsführung und Sicherheitssystem.
   Die Betriebsführung soll Störungen erkennen und entsprechende Maßnahmen einleiten und somit die Maschine wieder in den normalen Betriebsbereich zurückführen.
   Das Sicherheitssystem soll automatisch ansprechen, nachdem sicherheitsrelevante Grenzwerte überschritten wurden.
- Nur das Sicherheitssystem ist dann Bestandteil einer SRP/CS und muss konform zur Maschinenrichtlinie sein.
- Performance Level wird von den Maschinenherstellern gefordert, somit Einhaltung der Norm "EN ISO 13849-1/2".
- Erstellung einer sicheren Verbindung des SRP/CS zwischen Pitchsystem und angrenzendem Maschinenteil (z.B. Schleifring, Topbox).
- Bestandteil der "sicherheitsbezogenen Teile einer Steuerung" (SRP/CS) ist nur das Sicherheitssystem. Die Betriebsführung ist insbesondere dem Sicherheitssystem untergeordnet. Somit ist das Sicherheitssystem unabhängig von der Betriebsführungs-Software und leitet automatisch Maßnahmen ein, nachdem sicherheitsrelevante Grenzwerte überschritten wurden.

Die Erfindung wird nachfolgend anhand bevorzugter Ausführungsformen unter Bezugnahme auf die Zeichnung beschrieben. In der Zeichnung zeigen:
- Fig. 1: eine schematische Ansicht einer Windenergieanlage,
- Fig. 2: eine schematische Vorderansicht eines Rotors der Windenergieanlage,
- Fig. 3: eine schematische Darstellung eines Pitchsystems der Windenergieanlage,
- Fig. 4: eine schematische Darstellung eines Sicherheitssystems der Windenergieanlage gemäß einer ersten Ausführungsform der Erfindung,
- Fig. 5: eine schematische Darstellung eines Sicherheitssystems der Windenergieanlage gemäß einer zweiten Ausführungsform der Erfindung und
- Fig. 6: eine schematische Darstellung eines bekannten Sicherheitssystems.

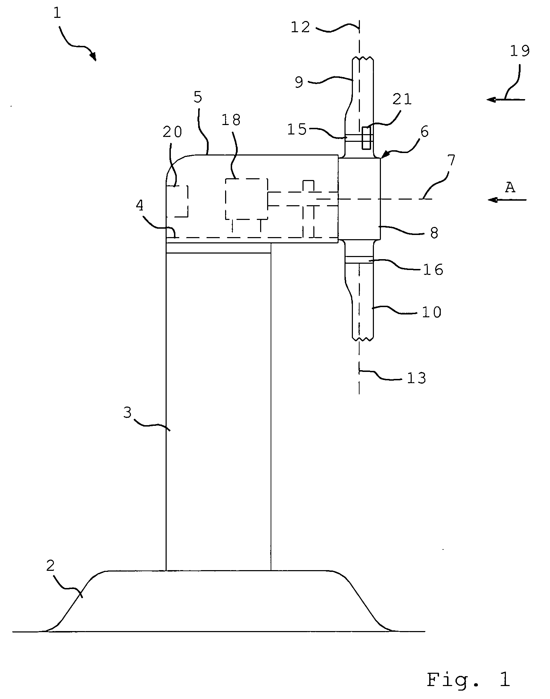

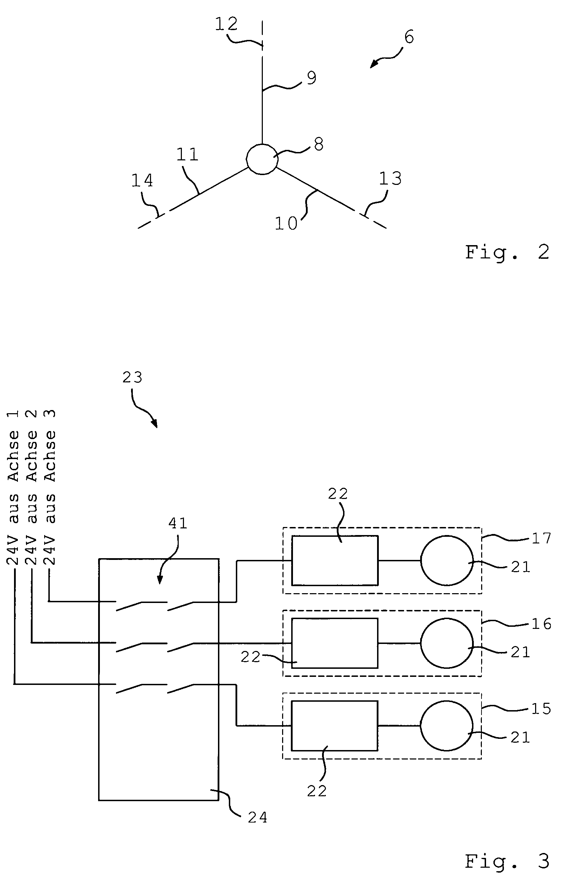

Aus Fig. 1 ist eine Windenergieanlage 1 mit einem auf einem Fundament 2 aufstehenden Turm 3 ersichtlich, an dessen dem Fundament 2 abgewandten, oberen Ende ein Maschinenträger 4 gelagert ist, der ein Maschinenhaus 5 trägt. An dem Maschinenträger 4 ist ein Rotor 6 um eine Rotorachse 7 drehbar gelagert, wobei eine schematische Vorderansicht des Rotors 6 aus Fig. 2 ersichtlich ist. Der Rotor 6 weist eine Rotornabe 8 und damit verbundene Rotorblätter 9, 10 und 11 auf, die jeweils um ihre Blattachse 12, 13 bzw. 14 relativ zu der Rotornabe 8 drehbar sind. Die Blattachsen 12, 13 und 14 verlaufen dabei senkrecht oder näherungsweise senkrecht zur Rotorachse 7. Jedes der Rotorblätter 9, 10 und 11 ist mit einem Antriebssystem 15, 16 bzw. 17 (siehe Fig. 3) mechanisch gekoppelt, mittels welchem das jeweilige Rotorblatt um die zugehörige Blattachse drehbar ist.

Der Rotor 6 ist mechanisch mit einem elektrischen Generator 18 gekoppelt, der an dem Maschinenträger 4 befestigt und in dem Maschinenhaus 5 angeordnet ist. Der Rotor 6 wird durch Wind 19 um seine Rotorachse 7 gedreht, wobei die Rotationsenergie des Rotors 6 mittels des Generators 18 zumindest teilweise in elektrische Energie umgewandelt wird. Für den kontrollierten Betrieb der Windenergieanlage 1 ist eine übergeordnete Steuerung 20 vorgesehen, mittels welcher unter anderem die Antriebssysteme 15, 16 und 17 gesteuert werden. Jedes der Antriebssysteme 15, 16 und 17 weist einen Motor 21 und eine zugehörige Motorsteuerung 22 auf, wobei der Motor 21 des Antriebssystems 15 schematisch in Fig. 1 dargestellt ist. Die Antriebssysteme 15, 16 und 17 sind Teil eines im Rotor 6 angeordneten Pitchsystems 23, welches in vereinfachter (Teil-)Darstellung aus Fig. 3 ersichtlich ist. Im bestimmungsgemäßen Betrieb der Windenergieanlage 1 wird das Pitchsystem 23 von der übergeordneten Steuerung 20 zum Drehen der Rotorblätter in gewünschte Blattwinkelstellungen angesteuert. Ferner ist in Fig. 3 eine Sicherheitsschalteinrichtung 24 mit einem Relais 41 dargestellt, mittels welcher jeder Motorsteuerung 22 über einen separaten Relaisausgang ein Aktivierungssignal zuführbar ist, das hier 24V beträgt. Die Aktivierungssignale sind mit "24V aus Achse 1", mit "24V aus Achse 2" und mit "24V aus Achse 3" bezeichnet. Werden die Aktivierungssignale den Motorsteuerungen 22 zugeführt, so führen die Antriebssysteme 15, 16 und 17 eine Fahrt in die sichere Position aus. Das Antriebssystem 15 wird auch als "Achse 1", das Antriebssystem 16 als "Achse 2" und das Antriebssystem 17 als "Achse 3" bezeichnet. Die Aktivierungssignale stammen aus den Antriebssystemen, wobei das Aktivierungssignal "24V aus Achse 1" aus dem Antriebssystem 15, das Aktivierungssignal "24V aus Achse 2" aus dem Antriebssystem 16 und das Aktivierungssignal "24V aus Achse 3" aus dem Antriebssystem 17 stammt.

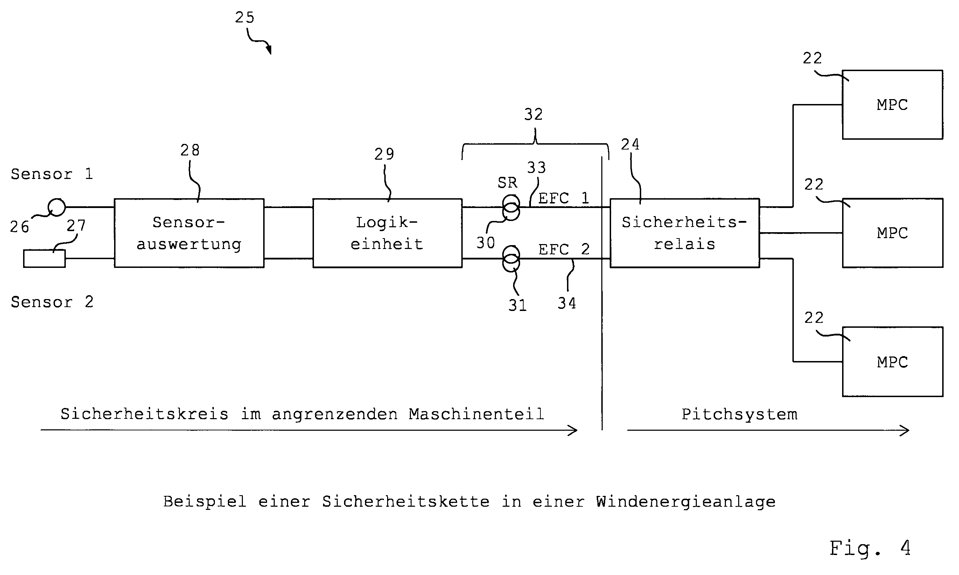

Aus Fig. 4 ist eine schematische Darstellung eines Sicherheitssystems 25 gemäß einer ersten Ausführungsform ersichtlich, wobei zwei Sensoren (Sensor 1, Sensor 2) 26 und 27 mit einer Auswerteeinrichtung (Sensorauswertung) 28 verbunden sind, mittels welcher eine Signalaufbereitung der von den Sensoren 26 und 27 gelieferten Sensorsignale erfolgt. Die Sensoren 26 und 27 und die Auswerteeinrichtung 28 bilden dabei gemeinsam eine Sensoreinrichtung. Die Sensoren 26 und 27 erfassen insbesondere einen oder wenigstens einen Betriebsparameter der Windenergieanlage redundant. Der Betriebsparameter ist oder umfasst z.B. die Drehzahl des Rotors 6, sodass es sich bei den Sensoren 26 und 27 insbesondere um Drehzahlsensoren handelt, mittels welchen die Drehgeschwindigkeit des Rotors 6 um die Rotorachse 7 erfassbar ist. Die aufbereiteten Sensorsignale werden einer Steuerung (Logikeinheit) 29 zugeführt, mittels welcher erkennbar ist, ob der erfasste Betriebsparameter innerhalb zulässiger Grenzen liegt. Insbesondere wird mittels der Steuerung 29 geprüft, ob die erfasste Drehzahl einen vorgegebenen Drehzahlschwellenwert erreicht oder überschreitet. Die Steuerung 29 erzeugt zwei gleiche Steuersignale EFC 1 und EFC 2 und gibt diese über Schleifringe 30 und 31 einer Übertragungseinrichtung (SR) 32 an die Sicherheitsschalteinrichtung (Sicherheitsrelais) 24 ab. Liegt der Betriebsparameter innerhalb der zulässigen Grenzen und/oder liegt die Drehzahl unterhalb des Drehzahlschwellenwerts, liefern die Steuersignale EFC 1 und EFC 2 jeweils eine Gleichspannung von 24V, was einem H-Pegel entspricht. Liegt der Betriebsparameter außerhalb der zulässigen Grenzen und/oder ist die Drehzahl größer oder gleich dem Drehzahlschwellenwert, liefern die Steuersignale EFC 1 und EFC 2 eine Spannung von 0V, was einem L-Pegel entspricht.

Die Sensoren 26 und 27, die Auswerteeinrichtung 28, die Steuerung 29 und die Übertragungseinrichtung 32 bilden gemeinsam einen Sicherheitskreis, der im Maschinenteil der Windenergieanlage 1 vorgesehen ist. Der Maschinenteil umfasst insbesondere den Maschinenträger 4 und/oder die am Maschinenträger vorgesehenen Einrichtungen und/oder Maschinen, wobei der Rotor 6 mit Pitchsystem 23 dem Maschinenteil nicht zugerechnet wird. Der Sicherheitskreis und die Sicherheitsschalteinrichtung 24 und/oder der Sicherheitskreis und das Pitchsystem 23 bilden gemeinsam bevorzugt eine Sicherheitskette.

Die Sicherheitsschalteinrichtung 24 umfasst eine Kurz- und Querschlusserkennung, sodass mittels der Sicherheitsschalteinrichtung 24 Kurz- und Querschlüsse in den die Steuersignale EFC 1 und EFC 2 führenden Steuerleitungen 33 und 34 der Übertragungseinrichtung 32 als Fehler in der Übertragung der Steuersignale erkennbar sind. Ferner sind mittels der Sicherheitsschalteinrichtung 24 auch noch andere Fehler in der Übertragung der Steuersignale erkennbar, wie z.B. ein Kabelabriss und/oder ein Kanalübersprung. Wird mittels der Sicherheitsschalteinrichtung 24 ein Fehler in den Steuersignalen und/oder in der Übertragung der Steuersignale erfasst, führt die Sicherheitsschalteinrichtung 24 durch Betätigen ihres Relais 41 jeder Motorsteuerung 22 das zugehörige Aktivierungssignal zu, sodass die Antriebssysteme 15, 16 und 17 eine Fahrt in die sichere Position durchführen. Ein Fehler in den Steuersignalen und/oder in der Übertragung der Steuersignale liegt z.B. dann vor, wenn sich die Steuersignale, beispielsweise aufgrund von Störungen, voneinander unterscheiden, insbesondere, wenn sich die Steuersignale über ein vorgegebenes Maß hinaus voneinander unterscheiden.

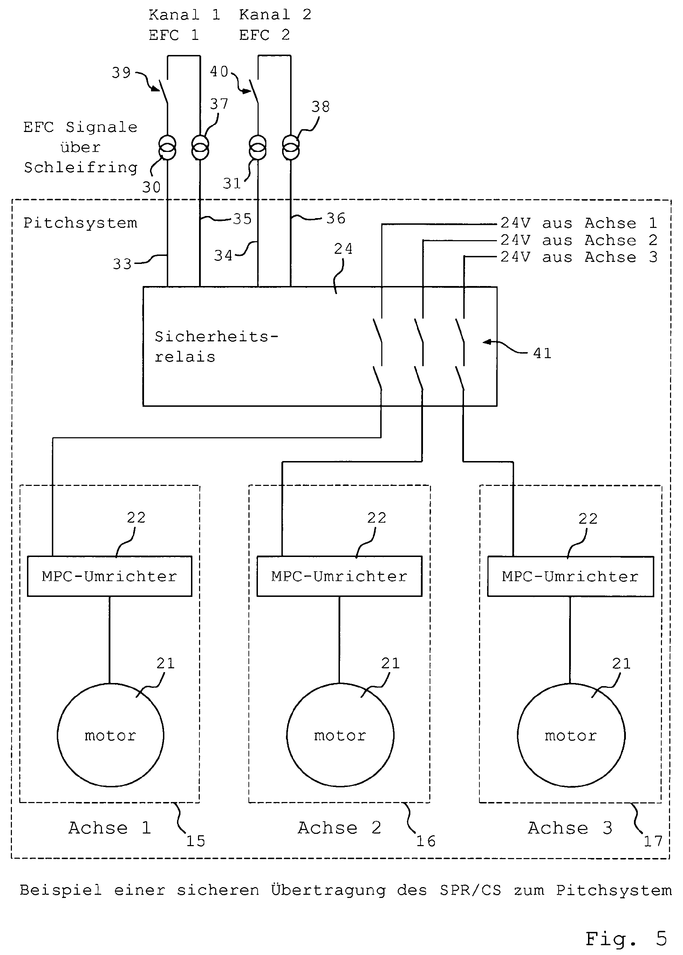

Aus Fig. 5 ist eine schematische Darstellung eines Sicherheitssystems 25 gemäß einer zweiten Ausführungsform der Erfindung ersichtlich, wobei zu der ersten Ausführungsform identische oder ähnliche Merkmale mit denselben Bezugszeichen wie bei der ersten Ausführungsform bezeichnet sind. Die Sicherheitsschalteinrichtung 24 erzeugt zwei elektrische Prüfsignale, die über separate Prüfsignalleitungen 35 und 36, die über Schleifringe 37 und 38 der Übertragungseinrichtung 32 geführt sind, den Eingängen von elektrischen Schaltern 39 und 40 zugeführt werden. Die Prüfsignale liefern jeweils eine Gleichspannung von 24V, was einem H-Pegel entspricht. An die Ausgänge der Schalter 39 und 40 sind die Steuerleitungen 33 und 34 angeschlossen, wobei die Schalter 39 und 40 mittels der Steuerung (Logikeinheit) schaltbar sind, wodurch die Steuersignale EFC 1 und EFC 2 erzeugbar sind. Im geschlossenen Zustand der Schalter 39 und 40 werden die Prüfsignale über die Steuerleitungen 33 und 34 zu der Sicherheitsschalteinrichtung 24 zurückgeführt, sodass die Steuersignale EFC 1 und EFC 2 jeweils eine Gleichspannung von 24V liefern, was einem H-Pegel entspricht. Im geschlossenen Zustand der Schalter 39 und 40 entsprechen die Steuersignale EFC 1 und EFC 2 somit den Prüfsignalen. Im geöffneten Zustand der Schalter 39 und 40 liegt hingegen keine Spannung an den Steuerleitungen 33 und 34 an, sodass die Steuersignale EFC 1 und EFC 2 nicht vorhanden sind und/oder jeweils keine Spannung liefern, was einem L-Pegel entspricht.

Zur weiteren Beschreibung der zweiten Ausführungsform wird auf die Beschreibung der ersten Ausführungsform verwiesen. Insbesondere kann das Sicherheitssystem gemäß der zweiten Ausführungsform das Sicherheitssystem gemäß der ersten Ausführungsform ersetzen.

### Bezugszeichenliste

- 1: Windenergieanlage
- 2: Fundament
- 3: Turm
- 4: Maschinenträger
- 5: Maschinenhaus
- 6: Rotor
- 7: Rotorachse
- 8: Rotornabe
- 9: Rotorblatt
- 10: Rotorblatt
- 11: Rotorblatt
- 12: Blattachse
- 13: Blattachse
- 14: Blattachse
- 15: Antriebssystem
- 16: Antriebssystem
- 17: Antriebssystem
- 18: Generator
- 19: Wind
- 20: übergeordnete Steuerung
- 21: Motor
- 22: Motorsteuerung
- 23: Pichsystem
- 24: Sicherheitsschalteinrichtung
- 25: Sicherheitssystem
- 26: Sensor
- 27: Sensor
- 28: Auswerteeinrichtung
- 29: Logikeinheit / Steuerung
- 30: Schleifring
- 31: Schleifring
- 32: Übertragungseinrichtung
- 33: elektrische Steuerleitung
- 34: elektrische Steuerleitung
- 35: elektrische Prüfsignalleitung
- 36: elektrische Prüfsignalleitung
- 37: Schleifring
- 38: Schleifring
- 39: elektrischer Schalter
- 40: elektrischer Schalter
- 41: Relais der Sicherheitsschalteinrichtung

## Patentansprüche

1. Sicherheitssystem für eine Windenergieanlage, mit
- einem Pitchsystem (23), welches mehrere Antriebssysteme (15, 16, 17) und wenigstens eine Sicherheitsschalteinrichtung (24) umfasst, mittels welcher in Abhängigkeit von wenigstens einem Steuersignal jedes der Antriebssysteme (15, 16, 17) zum Durchführen einer Fahrt in eine sichere Position ansteuerbar ist,
- einem in einem an das Pitchsystem (23) angrenzenden Maschinenteil vorgesehenen Sicherheitskreis, der eine Übertragungseinrichtung (32) und eine Steuerung (29) umfasst, mittels welcher das wenigstens eine Steuersignal erzeugbar ist, welches mittels der Übertragungseinrichtung (32) von der Steuerung (29) zu der Sicherheitsschalteinrichtung (24) übertragbar ist, wobei
- das Steuersignal von der Steuerung (29) in Form von wenigstens zwei Steuersignalen (EFC 1, EFC 2) erzeugbar und/oder abgebbar ist,
- mittels der Übertragungseinrichtung (32) die Steuersignale (EFC 1, EFC 2) von der Steuerung (29) zu der Sicherheitsschalteinrichtung (24) übertragbar sind,
- mittels der Sicherheitsschalteinrichtung (29) unter Auswertung der Steuersignale (EFC 1, EFC 2) ein sicherheitsrelevanter Fehler in dem Sicherheitskreis erkennbar und bei Vorliegen eines solchen Fehlers jedes der Antriebssysteme (15, 16, 17) zum Durchführen einer Fahrt in die sichere Position ansteuerbar ist,
**dadurch gekennzeichnet, dass**
- das Pitchsystem (23) relativ zu dem angrenzenden Maschinenteil drehbar ist und die Übertragungseinrichtung (32) eine Drehübertragungseinrichtung ist,
- mittels der Sicherheitsschalteinrichtung (24) wenigstens zwei Prüfsignale erzeugbar sind,
- mittels der Übertragungseinrichtung (32) die Prüfsignale von der Sicherheitsschalteinrichtung (24) zu der Steuerung (29) übertragbar sind,
- mittels der Steuerung (29) aus den Prüfsignalen die Steuersignale (EFC 1, EFC 2) bildbar sind.

2. Sicherheitssystem nach Anspruch 1, **dadurch gekennzeichnet, dass** das Steuersignal von der Steuerung (29) in Form von den wenigstens zwei Steuersignalen (EFC 1, EFC 2) redundant erzeugbar ist.

3. Sicherheitssystem nach Anspruch 1 oder 2, **dadurch gekennzeichnet, dass** mittels der Sicherheitsschalteinrichtung (24) die Steuersignale (EFC 1, EFC 2) einer Plausibilitätsprüfung unterziehbar sind, wobei das Vorliegen eines sicherheitsrelevanten Fehlers im Sicherheitskreis aus dem Ergebnis der Plausibilitätsprüfung erkennbar ist.

4. Sicherheitssystem nach Anspruch 3, **dadurch gekennzeichnet, dass** mittels der Sicherheitsschalteinrichtung (24) die Steuersignale (EFC 1, EFC 2) zusammen mit wenigstens einem anderen Signal, welches mittels der Übertragungseinrichtung (32) zu der Sicherheitsschalteinrichtung (24) übertragbar ist, der Plausibilitätsprüfung unterziehbar sind.

5. Sicherheitssystem nach einem der vorangehenden Ansprüche, **dadurch gekennzeichnet, dass** die Sicherheitsschalteinrichtung (24) eine Kurz- und Querschlusserkennung umfasst.

6. Sicherheitssystem nach einem der vorangehenden Ansprüche, **dadurch gekennzeichnet, dass** mittels der Sicherheitsschalteinrichtung (24) die Steuersignale (EFC 1, EFC 2) miteinander vergleichbar sind und das Vorliegen eines sicherheitsrelevanten Fehlers im Sicherheitskreis aus dem Vergleichsergebnis erkennbar ist.

7. Sicherheitssystem nach einem der vorangehenden Ansprüche, **dadurch gekennzeichnet, dass** die Steuersignale (EFC 1, EFC 2) im bestimmungsgemäßen Betrieb der Windenergieanlage einen vorgegebenen ersten Signalpegel aufweisen und mittels der Steuerung (29) zum Durchführen einer Fahrt in die sichere Position abschaltbar sind.

8. Sicherheitssystem nach einem der vorangehenden Ansprüche, **dadurch gekennzeichnet, dass** mittels der Sicherheitsschalteinrichtung (24) die Signalpegel der Steuersignale (EFC 1, EFC 2) miteinander vergleichbar sind und das Vorliegen eines sicherheitsrelevanten Fehlers im Sicherheitskreis dadurch erkennbar ist, dass die Steuersignale über eine vorgegebene Zeitspanne unterschiedliche Signalpegel aufweisen.

9. Sicherheitssystem nach einem der vorangehenden Ansprüche, **dadurch gekennzeichnet, dass** mittels der Steuerung wenigstens zwei Schalter (39, 40) schaltbar sind, an denen eingangsseitig jeweils eines der Prüfsignale angelegt ist, wobei die Steuersignale (EFC 1, EFC 2) durch die Ausgangssignale der Schalter (39, 40) gebildet sind.

10. Sicherheitssystem nach Anspruch 9, **dadurch gekennzeichnet, dass** die Schalter (39, 40) im bestimmungsgemäßen Betrieb der Windenergieanlage geschlossen sind und mittels der Steuerung (29) zum Durchführen einer Fahrt in die sichere Position geöffnet werden können.

11. Sicherheitssystem nach einem der vorangehenden Ansprüche, **dadurch gekennzeichnet, dass** der Steuerung (29) wenigstens ein Eingangssignal zuführbar ist, welches von dieser auswertbar ist, wobei die Steuersignale (EFC 1, EFC 2) in Abhängigkeit von dem wenigstens einen Eingangssignal erzeugbar sind.

12. Sicherheitssystem nach Anspruch 11, **gekennzeichnet durch** eine mit der Steuerung (29) verbundene und wenigstens einen Sensor (26, 27) umfassende Sensoreinrichtung, mittels welcher das Eingangssignal in Abhängigkeit von wenigstens einem Sensorsignal erzeugbar ist, welches abhängig von wenigstens einem Betriebsparameter der Windenergieanlage ist.

13. Sicherheitssystem nach Anspruch 12, **dadurch gekennzeichnet, dass** der Sensor (26, 27) redundant vorgesehen ist, sodass das Eingangssignal der Steuerung (29) in Form von wenigstens zwei Eingangssignalen redundant zuführbar ist.

14. Sicherheitssystem nach einem der vorangehenden Ansprüche, **dadurch gekennzeichnet, dass** die Übertragungseinrichtung (32) Steuersignalschleifringe (30, 31), über welche die Steuersignale (EFC 1, EFC 2) führbar sind, und Prüfsignalschleifringe (37, 38) umfasst, über welche die Prüfsignale führbar sind.

## Claims

1. Safety system for a wind turbine with a pitch system (23) which comprises several drive systems (15, 16, 17) and a minimum of one safety switching device (24) by means of which, depending on a minimum of one control signal, each of the drive systems (15, 16, 17) can be actuated to execute a travel path to a safe position,
- a safety circuit provided in a machine part adjacent to the pitch system (23) which encompasses a transmission device (32) and a controller (29) using which a minimum of one control signal can be generated, which can be transmitted by means of the transmission device (32) from the controller (29) to the safety switching device (24), whereby
- the control signal can be generated and/or emitted by the controller (29) in the form of a minimum of two control signals (EFC 1, EFC 2), the control signals (EFC 1, EFC 2) can be transmitted by the transmission device (32) from the controller (29) to the safety switching device (24),
- by means of the safety switching device (29) through evaluation of the control signals (EFC 1, EFC 2) a safety-relevant fault in a safety circuit can be detected and if such a fault is present, each of the drive systems (15, 16, 17) can be actuated to execute a travel path to the safe position,
**characterized in that**
- the pitch system (23) can be rotated relative to the adjacent machine part and the transmission device (32) is a rotary transmission device,
- a minimum of two test signals can be generated by the safety switching device (24), - the test signals can be transmitted from the safety switching device (24) to the controller (29) by means of the transmission device (32),
- the control signals (EFC1, EFC 2) can be formed from the test signals by means of the controller (29).

2. Safety system in accordance with claim 1, **characterized in that** the control signal can be generated on a redundant basis by the controller (29) in the form of the minimum of two control signals (EFC 1, EFC 2).

3. Safety system in accordance with claim 1 or 2, **characterized in that** the control signals (EFC 1, EFC 2) can be subjected to a plausibility check by means of the safety switching device (24), whereby the existence of a safety-relevant fault in the safety circuit can be detected from the result of the plausibility check.

4. Safety system in accordance with claim 3, **characterized in that** by means of the safety switching device (24) control signals (EFC 1, EFC 2) together with a minimum of one other signal which can be transmitted via the transmission device (32) to the safety switching device (24) can be subjected to a plausibility check.

5. Safety system in accordance with one of the above claims **characterized in that** the safety switching device (24) encompasses a short and cross circuit detection.

6. Safety system in accordance with one of the above claims **characterized in that** by means of the safety switching device (24) control signals (EFC 1, EFC 2) can be compared with each other and the existence of a safety-relevant fault in the safety circuit detected based on the result of the comparison.

7. Safety system in accordance with one of the above claims **characterized in that** control signals (EFC 1, EFC 2) demonstrate a prescribed initial signal level when the power turbine is operated in accordance with its intended use and can be switched off by means of the controller (29) to execute a travel path to the safe position.

8. Safety system in accordance with one of the above claims **characterized in that** by means of safety switching device (24) the signal level of control signals (EFC 1, EFC 2) can be compared to each other and the existence of a safety-relevant fault in the safety circuit can be detected by the fact that the control signals have different switching levels over a prescribed time period.

9. Safety system in accordance with one of the above claims **characterized in that** by means of the controller, a minimum of two switches (39, 40) can be switched at which one of the test signals is applied at the input side, whereby the control signals (EFC 1, EFC 2) are formed by the output signals of the switches (39, 40).

10. Safety system in accordance with claim 9 **characterized in that** the switches (39, 40) are closed when the turbine is operating in accordance with its intended use and can be opened by means of the controller (29) to execute a travel path to the safe position.

11. Safety system in accordance with one of the above claims **characterized in that** a minimum of one input signal can be fed to the controller (29) which can be evaluated by the controller, whereby control signals (EFC 1, EFC 2) can be generated depending on the minimum of one input signal.

12. Safety system in accordance with claim 11, **characterized by** a sensor device linked to the controller (29) and comprising at least one sensor (26, 27), by means of which the input signal can be generated depending on a minimum of one sensor signal, which is dependent upon a minimum of one operating parameter of the wind turbine.

13. Safety system in accordance with claim 12, **characterized in that** the sensor (26, 27) is designed for redundancy, so that the input signal of the controller (29) is fed redundantly in the form of a minimum of two input signals.

14. Safety system in accordance with one of the above claims **characterized in that** the transmission device (32) encompasses control signal slip rings (30, 31) over which the control signals (EFC 1, EFC 2) can be fed, and test signal slip rings (37, 38) over which the test signals can be fed.

## Revendications

1. Système de sécurité pour une installation d'énergie éolienne, avec
- Un système de réglages de pales (23) qui comporte plusieurs systèmes d'entraînement (15, 16, 17) et au moins un dispositif de commutation de sécurité (24) à l'aide duquel chacun des systèmes d'entraînement (15, 16, 17) est activable, en fonction d'au moins un signal de commande, pour l'exécution d'un déplacement dans la position de sécurité,
- Un circuit de sécurité prévu dans un élément mécanique attenant au système de réglage des pales (23), qui comporte un dispositif de transmission (32) et une commande (29) à l'aide de laquelle peut être généré le au moins un signal de commande qui est transmissible, à l'aide du dispositif de transmission (32), de la commande (29) au dispositif de commutation de sécurité (24),
- Le signal de commande étant générable et/ou émettable par la commande (29), sous la forme d'au moins deux signaux de commande (EFC 1, EFC 2),
- Les signaux de commande (EFC 1, EFC 2) étant transmissibles, à l'aide du dispositif de transmission (32), de la commande (29) au dispositif de commutation de sécurité (24),
- Un défaut touchant à la sécurité, dans le circuit de sécurité, étant détectable à l'aide du dispositif de commutation de sécurité (29), par évaluation des signaux de commande (EFC 1, EFC 2) et chacun des systèmes d'entraînement (15, 16, 17) étant activable, pour l'exécution d'un déplacement dans la position de sécurité, en présence d'un tel défaut
- Le système de réglages de pales (23) étant rotatif par rapport à l'élément mécanique attenant et le dispositif de transmission (32) étant un dispositif de transmission de rotation,
- Au moins deux signaux de contrôle étant générables à l'aide du dispositif de commutation de sécurité (24),
- Les signaux de contrôle étant transmissibles du dispositif de commutation de sécurité (24) à la commande (29), à l'aide du dispositif de transmission (32),
- Les signaux de commande (EFC 1, EFC 2) étant formables à partir des signaux de contrôle, à l'aide de la commande (29).

2. Système de sécurité selon revendication 1, **caractérisé en ce que** le signal de commande est générable de façon redondante par la commande (29), sous la forme des au moins deux signaux de commande (EFC 1, EFC 2).

3. Système de sécurité selon revendication 1 ou 2, **caractérisé en ce que**, à l'aide du dispositif de commutation de sécurité (24), les signaux de commande (EFC 1, EFC 2) peuvent être soumis à un contrôle de plausibilité, la présence d'un défaut touchant à la sécurité, dans le circuit de sécurité, étant détectable à partir du résultat du contrôle de plausibilité.

4. Système de sécurité selon revendication 3, **caractérisé en ce que**, à l'aide du dispositif de commutation de sécurité (24), les signaux de commande (EFC 1, EFC 2) peuvent être soumis à un contrôle de plausibilité conjointement avec au moins un autre signal qui, à l'aide du dispositif de transmission (32), peut être transmis au dispositif de commutation de sécurité (24).

5. Système de sécurité selon l'une des revendications précédentes, **caractérisé en ce que** le dispositif de commutation de sécurité (24) comporte une détection de court-circuit et de court-circuit transversal.

6. Système de sécurité selon l'une des revendications précédentes, **caractérisé en ce que**, à l'aide du dispositif de commutation de sécurité (24), les signaux de commande (EFC 1, EFC 2) sont comparables entre eux et que la présence d'un défaut touchant à la sécurité, dans le circuit de sécurité, est détectable à partir du résultat de la comparaison.

7. Système de sécurité selon l'une des revendications précédentes, **caractérisé en ce que** les signaux de commande (EFC 1, EFC 2) présentent un premier niveau de signal défini, lorsque l'installation d'énergie éolienne est exploitée conformément aux fins pour lesquelles elle a été conçue, et qu'ils sont désactivables à l'aide de la commande (29) pour l'exécution d'un déplacement dans la position de sécurité.

8. Système de sécurité selon l'une des revendications précédentes, **caractérisé en ce que**, à l'aide du dispositif de commutation de sécurité (24), les niveaux des signaux de commande (EFC 1, EFC 2) sont comparables entre eux et que la présence d'un défaut touchant à la sécurité, dans le circuit de sécurité, est détectable en ce sens que les signaux de commande présentent différents niveaux de signaux pendant un laps de temps défini.

9. Système de sécurité selon l'une des revendications précédentes, **caractérisé en ce que**, à l'aide de la commande, au moins deux interrupteurs (39, 40), au niveau desquels l'un des signaux de contrôle est établi, côté entrée, sont commutables, les signaux de commande (EFC 1, EFC 2) étant formés par les signaux de sortie des interrupteurs (39, 40).

10. Système de sécurité selon revendication 9, **caractérisé en ce que** les interrupteurs (39, 40) sont fermés, lorsque l'installation d'énergie éolienne est exploitée conformément aux fins pour lesquelles elle a été conçue, et qu'ils peuvent être ouverts à l'aide de la commande (29), pour l'exécution d'un déplacement dans la position de sécurité.

11. Système de sécurité selon l'une des revendications précédentes, **caractérisé en ce qu'**il peut être amené à la commande (29) au moins un signal d'entrée qui est évaluable par celle-ci, les signaux de commande (EFC 1, EFC 2) étant générables en fonction de l'au moins un signal d'entrée.

12. Système de sécurité selon revendication 11, **caractérisé par** un dispositif de capteurs relié à la commande (29) et comportant au moins un capteur (26, 27), à l'aide duquel le signal d'entrée est générable en fonction d'au moins un signal de capteur qui dépend d'au moins un paramètre d'exploitation de l'installation d'énergie éolienne.

13. Système de sécurité selon revendication 12, **caractérisé en ce que** le capteur (26, 27) est prévu redondant, ce qui fait que le signal d'entrée peut être amené de façon redondante à la commande (29), sous la forme d'au moins deux signaux d'entrée.

14. Système de sécurité selon l'une des revendications précédentes, **caractérisé en ce que** le dispositif de transmission (32) comporte des collecteurs de signaux de commande (30, 31) par l'intermédiaire desquels les signaux de commande (EFC 1, EFC 2) peuvent être guidés, et des collecteurs de signaux de contrôle (37, 38) par l'intermédiaire desquels les signaux de contrôle peuvent être guidés.
